# EUROPÄISCHE PATENTANMELDUNG

(11) **EP 0 676 820 A1**
(43) Veröffentlichungstag der Anmeldung: **11.10.1995**
(21) Anmeldenummer: 94103501.6
(22) Anmeldetag: 09.03.1994
(51) Int. Cl.: H01M 10/04, H01M 4/04

(54) **Aufladbare Batterie**

(71) Anmelder: Herrmann, Wolfgang, D-57548 Kirchen/Sieg (DE); Grebentchikov, Anatoli, D-57548 Kirchen (DE); Grebentchikov, Konstantin, D-57548 Kirchen (DE)
(72) Erfinder: Herrmann, Wolfgang, D-57548 Kirchen/Sieg (DE); Grebentchikov, Anatoli, D-57548 Kirchen (DE); Grebentchikov, Konstantin, D-57548 Kirchen (DE)

(57) **Zusammenfassung**

Aufladbare Batterie, bei der Teilchen Aktivstoffe der positiven Elektrode und Teilchen Aktivstoffe der positiven Seite bipolarischer Elektrode in Kristallgitterknoten der Metallstromableiter verteilt sind.

## Beschreibung

Die Erfindung gehört zu chemischen Stromquellen, besonders akkumulathorische Batterie, die in dem häuslichen, fachlichen Bereich der elektro-radio-apparaten. Geräten breit benutzt werden, so wie in den Erzeugnis (Ware), wo autonomer elektrischer Strom erforderlich ist.

Gegenstand der vorliegenden Erfindung ist die akkumulathorische Batterie, die endliche verschiedenpolarische, dünnblättrige Elektroden erhält, wenigstes ein bipolarischen Elektrod zwischen den beiden, der von eine- und -andere Seite mit dem separat von einander getrennt sind. Die Arbeit so einen akkumulathorischen Batterie basiert sich auf die verlaufende innerliche elektrochemische Reaktion, so breit bekannte in der Weltpratik (Praxis). Dabei kann die akk. Batterie in einem Entladungsregime funktionieren so auch seine Energoaufnahmefähigkeit wiederherstellen in einem Ladungsregime.
Vorteil (Nutzen) so einer Batterie ist folgendes:
Erstens es ergibt sich die Möglichkeit, die Energieaufnahmefähigkeit der Batterie zu vergrößern und dabei die Gabariten zu erhalten.
Zweitens ergibt sich die Möglichkeit auch, weiterhin den elektrischen Ptenzial auf ihren endlichen Stromschlüßen zu vergrößern und dabei die Gabariten erhalten (nicht verändern).
Drittens den Erzeuger solche Art Produktion ergibt sich die Möglichkeit die Vereinfachung der technologischen Prozessen. Das bedeutet wesentliche niedergehende Ausgabe für ihre Fertigung.

Der Gegenstand der Erfindung ist akkumulatirsche Batterie, in der die aktive Stoffen im Prozess der elektrochemischer Reaktion mit einem mehr höhen Koeffizient des Wirkungsgrades funktionieren.

Übereinstimmend der Erfindung so eine Höhe Funktionsfähigkeit des Stoffes kann erreicht werden, wenn ihrer Inhalt auf eins der Umfang der Batterie vergrößern und deren Plazierung Konstruktion veränder.

Akkumulatorische Batterie übereinstimmend zeigt vielseitigen Vorteil (Nutzen). Auf Grund dessen, das der Inhalt der aktiven Stoffen auf eins der Umfang sich vergrößern läßt, folglich kann man die Funktionszeit verbreiten bei so eine Batterie, d. h. die chemische Reaktion wird bei angegebenem Regime längere Zeit verlaufen, die neue Plazierung von aktiven Stoffen führt
1) zu Vereinfachung der technologischen Prozessen. Das gibt die Voraussetzung zur billider Fertigung der Produktion
2) Zu weiteren Vergrößerungen den strompotenzial (Elektropotenzial) auf endlichen Stromschlüßen der Batterie bei der Gabariten Erhaltung.
Alles zusammengenommenes erlaubt den Gebrauchsgebiet zu verbreiten, von so eine akk. Batterie wie chemische Stromquelle.

Ein führenden Weg zur Ausführung dieser Erfindung ist Vervollkommung der akk. Batteriekonstruktion. In Betracht der Analoge aus dem Gesichtspunkt der Konstruktion ergibt sich die Folgerung , daß die Menge der nutzlicheren Umfanges, der mit Elementen und Detais (Teilen) besetzt ist, die keinen Teil in der elektrochemische Reaktion nehmen ist nicht rechtfertigend groß. Folglich wird die technische Aufgabe gestellt, maximale Vervollkommung der genannten Teils und Elementen der Batterie, das die wenigstens 1/3 des gemeinsames Umfanges besitzen. In den frei gewordenen Teilen des Umfanges zusätzliche aktive Materialen reinbringen : positiven, negativen und bipolarischen Elektroden

## Patentansprüche

1. Die akkumulatorische Batterie enthält dünnblättrigen negativen Elektrod, der dargestellt ist als Metall Stromableiter auf dessen eine dünne Aktivstoffschicht negativer Elektroden aufgetragen ist. Bipolarischer Metallelektrod dargestellt im Zustande dünnblättrigerer Metallstromableiter bei dem von einer Seite eine dünne Schicht von aktiven Stofferse negativen Elektroden aufgetragen ist, auf der andere Seitesoberfläche, gegenstehende dem Verteiler (Separator), in den Kristallgittern die Aktivstoffteilchen des positiven Elektroden verteilt sind, dünnblättriger, positiver Elektrod, vorgestellt als Metallstromableiter, bei dem auf der Oberfläche die gegenstehende dem Verteiler (Separator) in dem Kristallgitternknoten Teilchen des aktiven Stoffes den positiven Elektroden verteilt sind (plaziert)

2. Akk. Batterie in Einstimmung mit Forderung 1. enthält wenigstens 2 Verteiler (Separatoren), die die Elektroden trennen, sie sind dargestellt als 2 einzelne Netze immer rechts gestrickt (strumpfgestrickt) aus Isoliergarn, dabei um den Kurzschluß der Elektroden zu vermeiden ist die Größe der Durchgangszellen bis zum Minimum geführt

3. Akk. Batterie in Einstimmung mit der Forderung 1 und 2 enthält in einem halbflüssigem Zustand Elektrolit, um den willkürlichen Auslauf zu vermeiden, dabei besorgt der Elektrolit eine 100 % Umspülung der aktiven Oberflächen der Elektroden.

4. Akkumulatorische Batterie, in Einstimmung mit der Forderung 1 enthält Oxyd Kupfer in in Form aktives Stoffes der positives Elektrodes.
